# EUROPÄISCHE PATENTANMELDUNG

(11) **EP 2 871 744 A1**
(43) Veröffentlichungstag der Anmeldung: **13.05.2015**
(21) Anmeldenummer: 14192898.6
(22) Anmeldetag: 12.11.2014
(51) Int. Cl.: H02J 3/38, B60K 16/00, H02J 7/35

(54) **Energiespeichersystem**

(30) Priorität: 12.11.2013 AT 8772013
(71) Anmelder: Schipfer, Gottfried, 8521 Wettmanstätten (AT)
(72) Erfinder: Schipfer, Gottfried, 8521 Wettmanstätten (AT)
(74) Vertreter: Patentbüro Paul Rosenich AG

(57) **Zusammenfassung**

Ein Energiespeichersystem für erneuerbare Energiequellen (1) ist zur Versorgung zumindest eines Verbrauchers (2) mit elektrischer Energie mit zumindest einem Anschluss für die erneuerbare Energiequelle (1), zumindest einem Netzanschluss (4) an ein externes Stromnetz (5) und zumindest einem elektrischen Energiespeicher (6) ausgestattet. Der elektrische Energiespeicher (6) ist über einen bidirektionalen isolierten DC/DC-Konverter (9) und ein bidirektionales Lade/Entlademodul (10) in das System integriert.

Die Aktivierung bzw. Deaktivierung des vorzugsweise ungeregelten DC/DC-Konverters (9) und/oder die Umschaltung bzw. die Regelung der Betriebsmodi Laden bzw. Entladen des Lade/Entlademoduls (10) erfolgt über eine elektronische Steuerung. Dabei wird bei Erreichen und/oder Überschreiten einer definierten Leistung durch die Energiequelle (1) bzw. am Einspeisepunkt (4) der Energiespeicher (6) über den DC-Ausgang der Energiequelle (1) aufgeladen.

## Beschreibung

Die Erfindung betrifft ein elektrisches Energiespeichersystem für erneuerbare Energiequellen wie Photovoltaikanlagen, Mikro-Windanlagen oder Kleinstwasserkraftwerke, zur Versorgung zumindest eines Verbrauchers mit elektrischer Energie, gemäss dem Oberbegriff des Anspruchs 1.

Derartige Systeme sind bekannt und umfassen beispielsweise zumindest einen Anschluss für die erneuerbare Energiequelle, zumindest einen Netzanschluss für den Verbraucher an ein externes Stromnetz und zumindest einen elektrischen Energiespeicher. Der Netzanschluss wird typischerweise über einen Einspeisezähler realisiert. Die Energiequelle ist über einen Wechselrichter mit dem zumindest einen Wechselstrom-Verbraucher verbindbar, gegebenenfalls auch mit dem Netzanschluss, um Energie in das externe Stromnetz einzuspeisen, wenn gegenüber dem Eigenbedarf ein Energieüberschuss besteht. Die Energiequelle ist aber auch alternativ mit dem elektrischen Energiespeicher verbindbar, um diesen aufzuladen und Energie für die Spitzenlastabdeckung oder für Zeiten zu speichern, in welchen die erneuerbare Energiequelle wenig oder keine Energie liefern kann. Für letzteren Fall ist dann auch der Energiespeicher mit dem Wechselrichter verbindbar.

In der WO 2011162722 A1 ist ein Energiespeichersystem beschrieben, das verschiedene Speichereinrichtungen für elektrische Energie umfasst, für welche die Ladeströme individuell gesteuert werden können, in Abhängigkeit von der dynamischen Kapazität jeder Speichereinrichtung. Die Gleichspannung kann einfach für unterschiedliche Wechselstromlast-Konfigurationen und/oder für im Betrieb wechselbare Speichermodule konfiguriert werden. Für diesen Zweck sind eine Mehrzahl von Speichereinrichtungen über bidirektionale isolierte DC/DC-Wandler mit einem Gleichstrombus verbunden. Eine Steuereinrichtung ist zur unabhängigen Bestimmung der Stromanforderungen für jede der Speichereinrichtungen eingerichtet. Ein weiterer Aspekt dieses Standes der Technik betrifft eine Anordnung mit einem Energieerzeugungssystem sowie einem Energiespeichersystem, welches überschüssige Leistung aufnimmt und bei höherer Anforderung als das Energieerzeugungssystem liefern kann Leistung abgibt.

Die US 2003 0047209 A1 offenbart ein Energiespeichersystem, mit einer Stromregeleinheit, welche den Strom entweder zu einer Batterie leitet bzw. einem Wechselrichter zuführt. Die Umschaltung erfolgt durch Schaltelemente. Jedoch erfolgt beim Laden eine komplette Umschaltung von der erneuerbaren Energiequelle auf den Batteriespeicher. Damit muss die Ladeleistung des Energiespeichersystems der vollen Leistung der Energiequelle entsprechen. Andererseits kann der Wechselrichter nicht genutzt werden um den Verbraucher zu versorgen, solange der Energiespeicher geladen wird.

Aufgabe der vorliegenden Erfindung ist es, ein für die einfache Nachrüstung bestehender Photovoltaik-Systeme geeignetes und wirtschaftliches Energiespeichersystem mit höchstmöglicher Effizienz anzugeben, in welchem System beliebige Arten von ein oder mehreren elektrischen Energiespeichern zum Einsatz kommen können.

Die Aufgabe wird durch die Merkmale des unabhängigen Anspruchs 1 gelöst. Vorteilhafte Weiterbildungen sind in den Figuren und in den abhängigen Patentansprüchen dargelegt.

Gemäss der Erfindung ist vorgesehen, dass der Energiespeicher über einen bidirektionalen und ungeregelten isolierten DC/DC-Konverter in die Verbindung zu dem vorzugsweise unidirektionalen Wechselrichter parallel zur Energiequelle zuschaltbar ist, gegebenenfalls über einen steuerbaren Schalter. Allenfalls können auch konventionelle bidirektionale Wechselrichter zum Einsatz kommen.

Vorzugsweise kommt dabei ein resonanter Konverter zum Einsatz. Dieser kann durch die erfindungsgemässe Topologie, bei welcher nicht zwischen der erneuerbaren Energiequelle und dem Wechselrichter komplett umgeschaltet wird, sondern bei dem deren Verbindung unverändert erhalten bleibt, kostenoptimal auf eine kleinere Leistung ausgelegt sein. Die Zuschaltung erfolgt vorzugsweise durch die elektronische Aktivierung des DC/DC-Konverters, kann gegebenfalls aber auch über einen steuerbaren Schalter realisiert sein.

Bevorzugt ist zwischen dem DC/DC-Konverter und dem Energiespeicher ein steuerbares Lade/Entlademodul geschaltet. Dieses Lade/Entlademodul sowie der DC/DC-Konverter bzw. der Schalter sind mit einer Steuerung verbunden, die zum Umschalten und vorzugsweise zur Regelung der Betriebsmodi Laden bzw. Entladen des Lade/Entlademoduls sowie zum Aktivieren des DC/DC-Konverters bzw. zum Umschalten des Schalters ausgelegt ist. Damit wird bei Erreichen und/oder Überschreiten einer definierten Leistung durch die Energiequelle der Energiespeicher aus der Energiequelle aufgeladen. Vorteilhafterweise ist das Lade/Entlademodul als (strom- und spannungs)geregelter nicht isolierter bidirektionaler DC/DC-Konverter ausgeführt.

Vorzugsweise ist die vom Lade/Entlademodul aus der Verbindung zwischen erneuerbarer Energiequelle und Wechselrichter abgezweigte Leistung als auch die aus dem Energiespeicher wieder abgebbare Leistung steuerbar. Diese ist vorzugsweise zwischen 0 und 50% der Nennleistung der erneuerbaren Energiequelle, insbesondere zwischen 0 und 40%, steuerbar. Es ist aber auch ein fix eingestellter Wert für die besagten Leistungen möglich. Damit ist es möglich, nur einen Teil der von der erneuerbaren Energiequelle erzeugten Leistung in den Energiespeicher einzuspeisen. Bei unzureichender, aber noch vorhandener Leistung der Energiequelle kann allenfalls auch nur ein Teil der benötigen Leistung durch den Energiespeicher am Wechselrichter zur Verfügung gestellt werden.

Gemäss einer weiteren Ausführungsform der Erfindung ist das Lade/Entlademodul mit zumindest einem Gleichstrom-Verbraucher verbindbar und ist dessen Versorgung über das Lade/Entlademodul über die Steuerung schaltbar. Dazu ist allenfalls einer der DC-Anschlusskanäle des Lade/Entlademoduls zum Anschliessen einer DC-Last ausgelegt.

Eine weitere Ausführungsform der Erfindung ist dadurch gekennzeichnet, dass das Lade/Entlademodul derart ausgelegt ist, dass ab einer definierbaren Leistung der Energiequelle die Differenz zwischen der aktuellen Last und der von der Energiequelle erzeugten Leistung in den Energiespeicher eingespeist wird, wobei vorzugsweise eine definierbare maximale Ladeleistung nicht überschritten wird.

Weiters kann erfindungsgemäss vorgesehen sein, dass das Lade/Entlademodul derart ausgelegt ist, dass die Ladung des Energiespeichers mit Konstantstromladung bis zu einem vordefinierbaren Ladezustand, vorzugsweise bis zu einem SOC von 95%, erfolgt.

Für Zustände des Systems, bei welchen durch Erhöhung der Last oder Reduktion der Leistung der Energiequelle eine Konstantstromladung nicht mehr möglich ist, wird vorzugsweise das Lade/Entlademodul derart ausgelegt, dass der Ladestrom reduziert und auf eine definierbare minimale Eingangsspannung der Ladegeräts geregelt.

Gemäss einer weiteren Ausführungsform der Erfindung wird das Lade/Entlademodul derart ausgelegt, dass bei Unterschreitung einer definierten zweiten Leistung durch die Energiequelle die Entladung des Energiespeichers für die Versorgung des Wechselrichters und weiters des Verbrauchers und/oder die Rückspeisung über den Netzanschluss aktiviert wird.

Bei einer derartigen Ausführungsform ist das Lade/Entlademodul vorzugweise derart ausgelegt, dass vorzugsweise die Entladung des Energiespeichers mit definierbarer Konstantstromentladung bis zu einem vordefinierbaren Ladezustand, vorzugsweise bis zu einem SOC von 15%, erfolgt.

Vorteilhafterweise kann bei allen vorgehend beschriebenen Systemen vorgesehen sein, dass der DC/DC-Wandler derart ausgelegt ist, dass er erst bei Erreichen und/oder Überschreiten einer definierten Einspeise-Leistung durch die Energiequelle am Netzanschluss der DC/DC-Wandler aktiviert und der Ladevorgang des Energiespeichers gestartet wird, wobei die Steuerung zur Abfrage der Einspeise-Leistung mit einem Einspeisezähler verbunden ist.

Vorzugsweise ist dabei die Steuerung mit einer Einrichtung zur drahtlosen Datenübertragung oder Powerline communication (PLC) versehen und über diese Einrichtung mit dem Einspeisezähler verbunden.

Das Lade/Entlademodul ist für die Versorgung beliebiger Batterietypen, gegebenenfalls auch gleichzeitig, bis zu einer maximalen Spannung von 60V und möglicher Rückspeisung der Energie aus den Batterien zu mindestens 90% ausgelegt.

Ein weiteres optionales Merkmal der Erfindung liegt darin, dass der bidirektionale isolierte DC/DC-Konverter für die Heruntersetzung der Spannung der Energiequelle auf eine ungefährliche Spannung von kleiner als 60V mit einer Effizienz von höher 95% ausgelegt ist und über einen Remote ON/OFF über eine externe Steuerung aktiviert/deaktiviert werden kann.

Die Steuerung ist gemäss einer erfindungsgemässen Ausführungsform über eine vorzugsweise digitale Schnittstelle mit dem Wechselrichter und der Energiequelle verbunden und fragt deren Leistung und weitere Parameter ab.

Eine weitere Ausführungsform sieht noch vor, dass eine Messeinrichtung für die Strommessung am Ausgang der Energiequelle vorgesehen und vorzugsweise direkt mit der Steuerung verbunden ist.

Mit dem erfindungsgemässen Energiespeichersystem können beliebige Batterien (LiFe, Li-Ionen, Blei, NiMh) verwendet werden, sogar mit unterschiedlichen Spannungen, Kapazitäten und Typen. Das System kann einfach in bestehende Energieerzeugungssysteme integriert werden, da deren bereits vorhandener Wechselrichter genutzt wird.

Bestehende Photovoltaikanlagen können mit nur geringem Aufwand und geringen Kosten erweitert werden. Typische 5 kWp-Systeme können einfach und ohne den Aufwand für den Einbau eines neuen oder stärkeren Wechselrichters um 1.2 kWp Photovoltaik-Module und mit 5 kWh-Batterien erweitert werden. Alternativ kann ein Wechselrichter für neu zu errichtende Photovoltaikanlagen kleiner und damit günstiger dimensioniert werden, so dass sich die Investitionskosten erniedrigen und die Ertragsnutzung höher wird. Weiters ermöglicht das System die effiziente und kostengünstige Einbindung von Mikrowind- und Kleinstwasserkraftwerken in das Wechselstromnetz mittels bestehender Photovoltaikanlage.

Weitere Vorteile, Merkmale und Einzelheiten der Erfindung ergeben sich aus der nachfolgenden Beschreibung, in der unter Bezugnahme auf die Zeichnungen einige Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Dabei zeigt:
- Fig. 1: ein Schema einer herkömmlichen Photovoltaikanlage, und
- Fig. 2: ein Schema eines Ausführungsbeispieles eines erfindungsgemässen Energiespeichersystems in Verbindung mit einer Photovoltaikanlage sowie einer Mikrowind-Anlage.

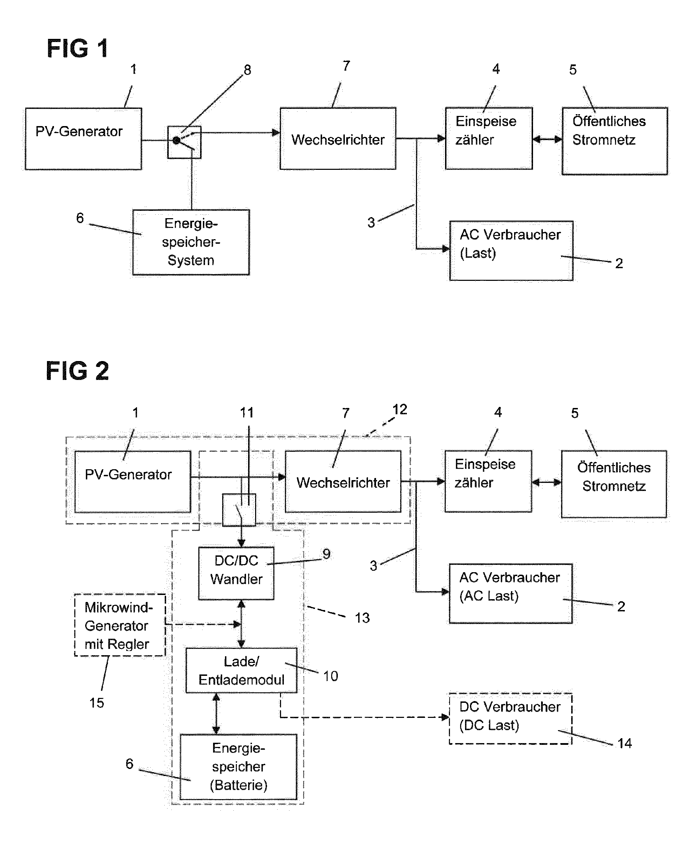

Fig. 1 zeigt ein Schema eines einfachen herkömmlichen Systems mit einem Photovoltaik-Generator als erneuerbare Energiequelle 1. Dieser speist über den Wechselrichter 7 und einen ersten Anschluss 3 zumindest einen Verbraucher 2 mit elektrischer Energie in Form von Wechselstrom. Über einen Einspeisezähler 4 kann aber auch Energie in ein öffentliches Stromnetz 5 eingespeist werden und kann auch Energie aus dem Stromnetz 5 bezogen werden, um auch damit den Verbraucher 2 zu versorgen.

Der Photovoltaik-Generator 1 kann aber auch über einen Umschalter 8 mit einem Energiespeichersystem 6 verbunden werden, wobei der Strom entweder komplett zu beispielsweise einer Batterie oder komplett zum Wechselrichter 7 geleitet wird. Damit muss die Ladeleistung des Energiespeichersystems 6 der vollen Leistung der Energiequelle entsprechen. Andererseits kann der Wechselrichter 7 den Verbraucher 2 nicht versorgen, solange der Energiespeicher 6 geladen wird.

Fig. 2 hingegen ist eine schematische Darstellung eines bevorzugten Ausführungsbeispiels für ein erfindungsgemässes, in ein Energieversorgungssystem mit Netzanschluss 4 und einer erneuerbaren Energiequelle 1 integriertes Energiespeichersystem. Auch hier ist beispielsweise ein Photovoltaikgenerator als Beispiel für eine erneuerbare Energiequelle 1 vorgesehen, die auch in Form von etwa einer Mikrowindanlage 15 oder eines Kleinstwasserkraftwerkes vorgesehen sein kann. Die Versorgung eines Verbrauchers 2 über den Wechselrichter 7 und einen ersten Anschluss 3 sowie die Verbindung über den Einspeisezähler 4 mit dem öffentlichen Stromnetz 5 ist ähnlich dem bekannten System. Photovoltaikgenerator 1 und Wechselrichter 7 bilden zusammen die Photovoltaik-Anlage 12.

Integriert in die Photovoltaikanlage 12 ist nun das erfindungsgemässe Energiespeichersystem 13, wie in Fig. 2 ebenfalls deutlich dargestellt ist. In die Verbindung zwischen der erneuerbaren Energiequelle 1 und deren unidirektionalen Wechselrichter 7, ist ein bidirektionaler und ungeregelter und isolierter DC/DC-Konverter 9 parallel zur Energiequelle 1 zuschaltbar. Das erfindungsgemässe Energiespeichersystem 13 umfasst also Konverter 9, bei dem die Ausgangsspannung durch ein festes Übersetzungsverhältnis gegeben ist und nicht eingestellt werden kann. Die Zu- und Wegschaltung kann dabei vorzugsweise über die Aktivierung bzw. Deaktivierung des DC/DC-Konverters 9 über eine Steuerung der Energiespeicheranlage 13, allenfalls als Teil der Steuerung der gesamten Anlage, bestehend aus Photovoltaikanlage 11, Energiespeicheranlage 13 und gegebenenfalls auch Einspeisezähler 4 realisiert sein. Wie in Fig. 2 symbolisch dargestellt ist, könnte aber auch zur Zu- und Wegschaltung des DC/DC-Konverters 9 ein physisches, extern steuerbares Schaltelement 11 zwischen Konverter 9 und der Verbindung von Energiequelle 1 und Wechselrichter 7 geschaltet sein.

Zwischen dem DC/DC-Konverter 9 und dem Energiespeicher 6 ist weiters ein steuerbares Lade/Entlademodul 10 geschaltet. Vorteilhafterweise ist das Lade/Entlademodul 10 als sowohl strom- als auch spannungsgeregelter nicht isolierter bidirektionaler DC/DC-Konverter ausgeführt. Durch diese Regelung über die Steuerung zumindest der Energiespeicheranlage 13 können die aus der Verbindung zwischen erneuerbarer Energiequelle 1 und Wechselrichter 7 abgezweigte Leistung und als auch die aus dem Energiespeicher 6 wieder abgebbare Leistung gesteuert werden. Neben der Leistungssteuerung übernimmt die externe Steuerung auch das Umschalten der Betriebsmodi Laden bzw. Entladen des Lade/Entlademoduls 10 sowie die entsprechende Aktivierung des DC/DC-Konverters 9 oder das Umschalten des allfälligen physischen Schalters 11.

Die angesprochene Steuerung der Photovoltaikanlage 11 und/oder der Energiespeicheranlage 13 oder des Gesamtsystems ist typischerweise mit einer Mikrokontroller-Schaltung und dazugehöriger Steuerungssoftware/Firmware umgesetzt. Alternativ dazu kann beispielsweise über ein Computerprogrammprodukt im Speicher der Steuerung oder mittels einer fest verdrahteten Schaltung der nachfolgend erläuterte erfindungsgemässe Ablauf implementiert sein.

Gemäss dem in der Steuerung implementierten Ablauf wird bei Erreichen und/oder Überschreiten einer definierten Leistung durch die erneuerbare Energiequelle 1 der Energiespeicher 6 direkt über den DC Ausgang des Photovoltaikgenerators aufgeladen. Damit kann fast jede Anlage für erneuerbare Energiequellen 1 mit beliebigen Batterien (Lithium-Ionen, Blei, NiMh, etc.) als stationärem Energiespeicher 6 zur Erhöhung des Eigenstromverbrauchs bzw. zum autarken Betrieb erweitert werden. Dabei ist auch eine Mischung der Batteriearten vorteilhaft, wo beispielsweise langlebige, aber nur in einem engen SOC-Band betreibbare Typen mit sehr dynamischen und tiefer entladbaren Typen kombiniert werden können.

Vorzugsweise ist das System in 1,2kW-Schritten modular erweiterbar, so dass beispielsweise eine Photovoltaikanlage mit 5kW Spitzenleistung (typisch für ein Einfamilienhaus) mit einem 1,2kW Speichersystem und 5kWh Blei-Batterien erweitert werden kann, um die Eigenstromnutzung nahezu zu verdoppeln.

Speziell erneuerbare Energiequellen, die normalerweise Spannungen von kleiner als 50V liefern, wie etwa Mikro-Windanlagen 15 oder Kleinstwasserkraftwerke, können mit diesem System effizient in bestehende Photovoltaikanlagen 11 und damit auch weiter in das Wechselstromnetz 5 integriert werden, wie in Fig. 2 auch dargestellt ist. Ein Mikrowind-Generator 15 mit Regler wird dabei vorzugsweise zwischen dem DC/DC-Wandler 9 und dem Lade/Entlademodul 10 angeschlossen und kann damit sowohl für das Laden des Energiespeichers 6 als auch für die Versorgung des Verbrauchers 2 und allenfalls sogar für eine Einspeisung in das Stromnetz 5 genutzt werden.

An das Lade/Entlademodul 10 kann zusätzlich und/oder alternativ zum Energiespeicher 6 auch eine DC-Last 14 angeschlossen werden. Damit kann ein ungefährliches isoliertes DC-Netz mit niedriger Spannung aufgebaut werden, um DC-Verbraucher 14 wie LED-Beleuchtung, Notebooks, Drucker, Internetbox, Mediaserver etc. zu versorgen.

Die Steuerung erfolgt im einfachen Fall gemäss folgendem Verfahren: Sobald der Photovoltaikgenerator 1 die Durchschnittsgrundlast-Leistung von beispielsweise 1 kW um etwa 600 W überschreitet wird der Energiespeicher 6 über den DC Ausgang der Energiequelle 1 aufgeladen . Vorzugsweise wird dabei das Lade/Entlademodul 10 derart betrieben, dass ab einer definierbaren Leistung der Energiequelle 1 die Differenz zwischen der aktuellen Last und der von der Energiequelle 1 erzeugten Leistung in den Energiespeicher 6 eingespeist wird. Die Ladung erfolgt vorzugsweise mit Konstantstromladung (CCCV-Ladung) bis zu einem definierten Ladezustand (SOC_max) von typischerweise 95%, und vorzugsweise wird auch eine definierbare maximale Ladeleistung nicht überschritten.

Sollte die Erzeugungsleistung der Energiequelle 1 unter einen definierbaren Grenzwert fallen oder von Beginn an darunter liegen, z.B. maximal 40% der Durchschnittsgrundlast bringen (z.B. maximal 400W), wird die Konstantstromentladung des Energiespeichers 6 gestartet, bis dieser einen vordefinierbaren geringeren Ladezustand (SOC_min) von z.B. 15% erreicht hat. Die Messwerte kommen entweder vom Wechselrichter 7 der Photovoltaikanlage 11 über eine digitale Schnittstelle oder können von der Steuerung selbst ermittelt werden, etwa über eine Stromessung/-schätzung des Systems. Das bringt die Vorteile mit sich, dass die Energiespeicher 6 geschont werden, damit der maximale Ladungsumsatz (= Rentabilität) und die maximale kalendarische Lebensdauer erreicht wird. An Schlechtwettertagen (bei welchen P_PV den ganzen Tag kleiner als 1,6 kW liegt) wird typischerweise überhaupt kein Ladezyklus durchgeführt.

Gemäß einer weiter verfeinerten Variante der Erfindung kann das Laden des Energiespeichers 6 statt durch die Gleichstrom-Leistung des Photovoltaikgenerators 1 durch die Einspeiseleistung der Photovoltaikanlage 11 gesteuert werden, was dann das Vorhandensein einer Verbindung zum Einspeisezähler 4 voraussetzt, vorzugsweise über WLAN oder Bluetooth oder PLC. Das Entladen des Energiespeichers 6 kann dann auch zur Abdeckung von Spitzenlasten aktiviert werden und nicht nur zur verlängerten Bereitstellung des Grundstrombedarfs, was eine weitere Erhöhung der Eigenstromnutzung und damit eine weitere Kosteneinsparung darstellt.

Der Ladestart erfolgt wenn die PV-Anlage mehr als 500W Überschussleistung in das Netz einspeist. Das Aufladen des Energiespeichers 6 erfolgt vorzugsweise wieder mit Konstantstrom (CC) solange genug Energie durch den Photovoltaikgenerator 1 erzeugt wird. Ändert sich die Last oder die von der Energiequelle 1 erzeugte Leistung wird auf eine Mindest-Spannung am Eingang des Lade-/Entlademoduls 10 geregelt. Damit können sämtliche Lastanforderungen kleiner als die Leistung des Photovoltaikgenerators 1 ohne Netzleistungsbezug abgedeckt werden.

Für die Entladung des Energiespeichers 6 können zwei Modi vorgesehen sein. So kann eine planmäßige Entladung zu einer bestimmten Zeit vorgesehen sein, z.B. zwei Stunden vor Sonnenuntergang mit einem definierten Strom zur weiteren Deckung des Grundstrombedarfs. Dies wirkt wie eine Verlängerung der Sonnenscheindauer für die Photovoltaikanlage 11, wenn deren Leistung unterhalb eines vordefinierbaren Wertes bleibt. Da der Wirkungsgrad des Wechselrichters 7 bei geringer Gleichstrom-Eingangsleistung sinkt, wird aus Effizienzgründen angestrebt auch aus dem Energiespeicher 6 konstant eine bestimmte Leistung, z.B. mind. 700W, zu entladen, auch wenn der mittlere Grundstrombedarf etwas niedriger ist.

Eine Lastunterstützung kann ebenfalls vorgesehen werden. Wenn beispielweise eine hohe Lastanforderung erkannt wird, welche die aktuelle Leistung des Photovoltaikgenerators 1 deutlich übersteigt und vorzugsweise auch mit hoher Wahrscheinlichkeit über eine gewisse, vorgebbare Zeit besteht, wenn der Energiespeicher 6 bereits ausreichend aufgeladen und die Wahrscheinlichkeit hoch ist, den Energiespeicher 6 innerhalb einer definierten weiteren Zeitspanne (z.B. bis zum Sonnenuntergang bei Photovoltaikanlagen 11) noch vollladen zu können, dann wird auf Konstantstrom-Entladung am Lade/Entlademodul 10 umgeschaltet. Dadurch wird mit definiertem Strom die Lastanforderung seitens des Energiespeichers 6 unterstützt. Wird weniger Leistung für die Last benötigt so beginnt der Wechselrichter 7 mittels seines Maximum Power Point (MPP)-Trackers Energie in das Netz einzuspeisen. Ab einer definierten Netz-Einspeiseleistung (z.B. 5% der Entladeleistung geht ins Netz) wird die Entladung reduziert bzw. beendet. Dann wird wieder auf einen günstigen Ladestart-Zeitpunkt oder eine weitere Lastunterstützung (mit weiterer Entladung des Energiespeichers 6) gewartet.

Beim Entladen des Energiespeichers 6 wird vorzugsweise über die Steuerung des Wechselrichters 7 dafür gesorgt, dass kein Strom vom Energiespeicher 6 zurück zum Photovoltaikgenerator 1 (d.h. den miteinander verschalteten Solarmodulen) der Photovoltaikanlage 11 fließt.

Das Energiespeichersystem ist passiv (DC/DC-Wandler 9 und damit auch Lade/Entlademodul 10 ausgeschaltet), wenn der Energiespeicher 6 den SOC_max (z.B. 95%) erreicht hat, oder die Erzeugungsleistung des Photovoltaikgenerators 1 ungefähr der Lastanforderung entspricht, so dass es nicht effizient ist eine Ladung oder unterstützende Entladung durchzuführen, oder aber wenn der Energiespeicher 6 den vorgebbaren minimalen Ladezustand (SOCmin) von z.B. 15% erreicht hat

### Bezugszeichenliste

- 1: Photovoltaikgenerator
- 2: Verbraucher
- 3: Erster Anschluss
- 4: Netzanschluss
- 5: Stromnetz
- 6: Energiespeicher
- 7: Wechselrichter
- 8: Umschalter
- 9: DC-DC-Wandler
- 10: Lade-/Entlademodul
- 11: Steuerung
- 12: Photovoltaikanlage
- 13: Energiespeichersystem
- 14: DC Last
- 15: Mikro-Windanlage oder Kleinsfiniasserkraftwerk

## Patentansprüche

1. Energiespeichersystem für erneuerbare Energiequellen (1) wie Photovoltaikanlagen, Mikro-Windanlagen oder Kleinstwasserkraftwerke, zur Versorgung zumindest eines Verbrauchers (2) mit elektrischer Energie, umfassend zumindest einen Anschluss für die erneuerbare Energiequelle (1), zumindest einen Netzanschluss (4) für den Verbraucher (2) an ein externes Stromnetz (5), und mit zumindest einem elektrischen Energiespeicher (6), wobei die Energiequelle (1) und ein Wechselrichter (7) mit dem zumindest einen Verbraucher (2), gegebenenfalls auch mit dem Netzanschluss (4) verbindbar ist, wobei die Energiequelle (1) alternativ auch mit dem elektrischen Energiespeicher (6) verbindbar ist, und wobei der Energiespeicher (6) mit dem Wechselrichter verbindbar ist, **dadurch gekennzeichnet, dass** der Energiespeicher (6) über einen bidirektionalen und ungeregelten isolierten DC/DC-Konverter (9) in die Verbindung zu dem vorzugsweise unidirektionalen Wechselrichter (7) parallel zur Energiequelle (1) zuschaltbar ist, gegebenenfalls über einen steuerbaren Schalter (11).

2. Energiespeichersystem nach Anspruch 1, **dadurch gekennzeichnet, dass** zwischen dem DC/DC-Konverter (9) und dem Energiespeicher (6) ein steuerbares Lade/Entlademodul (10) geschaltet ist, wobei dieses Lade/Entlademodul (10) sowie der DC/DC-Konverter (9) bzw. der Schalter (11) mit einer Steuerung verbunden sind, die zum Umschalten und vorzugsweise zum Steuern der Betriebsmodi Laden bzw. Entladen des Lade/Entlademoduls (10) sowie zum Aktivieren des DC/DC-Konverters (9) bzw. zum Umschalten des Schalters (11) ausgelegt ist, um bei Erreichen und/oder Überschreiten einer definierten Leistung durch die Energiequelle (1) und/oder am Einspeisepunkt (4) den Energiespeicher (6) aus der Energiequelle (1) aufzuladen.

3. Energiespeichersystem nach Anspruch 2, **dadurch gekennzeichnet, dass** das Lade/Entlademodul (10) mit zumindest einem Gleichstrom-Verbraucher (14) verbindbar und dessen Versorgung über das Lade/Entlademodul (10) über die Steuerung schaltbar ist.

4. Energiespeichersystem nach Anspruch 2 oder 3, **dadurch gekennzeichnet, dass** das Lade/Entlademodul (10) derart ausgelegt ist, dass ab einer definierbaren Leistung der Energiequelle (1) die Differenz zwischen der aktuellen Last und der von der Energiequelle (1) erzeugten Leistung in den Energiespeicher (6) eingespeist wird, wobei vorzugsweise eine definierbare maximale Ladeleistung nicht überschritten wird.

5. Energiespeichersystem nach einem der Ansprüche 1 bis 4, **dadurch gekennzeichnet, dass** das Lade/Entlademodul (10) derart ausgelegt ist, dass die Ladung des Energiespeichers (6) mit Konstantstromladung mit Spannungsbegrenzung bis zu einem vordefinierbaren Ladezustand, vorzugsweise bis zu einem SOC von 95%, erfolgt.

6. Energiespeichersystem nach Anspruch 5, **dadurch gekennzeichnet, dass** das Lade/Entlademodul (10) derart ausgelegt ist, dass für Zustände des Systems, bei welchen durch Erhöhung der Last oder Reduktion der Leistung der Energiequelle (1) eine Konstantstromladung nicht mehr möglich ist, der Ladestrom reduziert und auf eine definierbare minimale Eingangsspannung der Lade/Entlademoduls (9) geregelt wird.

7. Energiespeichersystem nach zumindest einem der Ansprüche 1 bis 6, **dadurch gekennzeichnet, dass** das Lade/Entlademodul (10) derart ausgelegt ist, dass bei Unterschreitung einer definierten zweiten Leistung durch die Energiequelle (1) die Entladung des Energiespeichers (6) für die Versorgung des Wechselrichters (7) und weiters des Verbrauchers (2) und/oder die Rückspeisung über den Netzanschluss (4) aktiviert wird.

8. Energiespeichersystem nach Anspruch 7, **dadurch gekennzeichnet, dass** das Lade/Entlademodul (10) derart ausgelegt ist, dass die Entladung des Energiespeichers (6) mit definierbarer Konstantstromentladung mit Unterspannungsbegrenzung bis zu einem vordefinierbaren Ladezustand, vorzugsweise bis zu einem SOC von 15%, erfolgt.

9. Energiespeichersystem nach zumindest einem der Ansprüche 1 bis 8, **dadurch gekennzeichnet, dass** der DC/DC-Wandler (9) derart ausgelegt ist, dass er erst bei Erreichen und/oder Überschreiten einer definierten Einspeise-Leistung durch die Energiequelle (1) am Netzanschluss (4) aktiviert und der Ladevorgang des Energiespeichers (6) gestartet wird, wobei die Steuerung zur Abfrage der Einspeise-Leistung mit einem Einspeisezähler (4) verbunden ist.

10. Energiespeichersystem nach Anspruch 9, **dadurch gekennzeichnet, dass** die Steuerung mit einer Einrichtung zur drahtlosen Datenübertragung oder Powerline communication (PLC) versehen und über diese Einrichtung mit dem Einspeisezähler (4) verbunden ist.

11. Energiespeichersystem nach zumindest einem der Ansprüche 1 bis 10, **dadurch gekennzeichnet, dass** das Lade/Entlademodul (10) für die Versorgung beliebiger Batterietypen, gegebenenfalls auch gleichzeitig, bis zu einer maximalen Spannung von 60V und möglicher Rückspeisung der Energie aus den Batterien zu mindestens 90% ausgelegt ist.

12. Energiespeichersystem nach zumindest einem der Ansprüche 1 bis 11, **dadurch gekennzeichnet, dass** der bidirektionale isolierte DC/DC-Konverter (9) für die Heruntersetzung der Spannung der Energiequelle (1) auf eine ungefährliche Spannung von kleiner als 60V mit einer Effizienz von höher 95% ausgelegt ist und über einen Remote ON/OFF über eine externe Steuerung aktiviert/deaktiviert werden kann.

13. Energiespeichersystem nach zumindest einem der Ansprüche 1 bis 12, **dadurch gekennzeichnet, dass** eine Steuerung über eine vorzugsweise digitale Schnittstelle mit dem Wechselrichter (7) und der Energiequelle (1) verbunden ist und deren Leistung und weitere Parameter abfrägt.

14. Energiespeichersystem nach zumindest einem der Ansprüche 1 bis 13, **dadurch gekennzeichnet, dass** eine Messeinrichtung für die Strommessung am Ausgang der Energiequelle (1) vorgesehen und vorzugsweise direkt mit der Steuerung verbunden ist.
